# EUROPEAN PATENT APPLICATION

(11) **EP 3 100 783 A1**
(43) Date of publication of application: **07.12.2016**
(21) Application number: 15743160.2
(22) Date of filing: 21.01.2015
(51) Int. Cl.: B01J 19/00, B01F 5/00, B01J 19/08, B03C 3/00, B03C 5/00, C02F 1/46, C25B 11/12, C25C 1/00, G01N 37/00

(54) **FLOW CHANNEL PLATE**

(30) Priority: 31.01.2014 JP 2014016538
(71) Applicant: Alps Electric Co., Ltd., Tokyo 145-8501 (JP)
(72) Inventor: SAMESHIMA, Kenichiro, Tokyo 145-8501 (JP)
(74) Representative: Klunker . Schmitt-Nilson . Hirsch
(86) International application number: PCT/JP2015/051540
(87) International publication number: WO 2015/115272

(57) **Abstract**

[Object] To provide a flow channel plate that can cause a sufficient electrochemical reaction by flowing a fluid through a flow channel and applying a voltage to an electrode provided in the flow channel.

[Solution] In a flow channel plate 1, in which a first base material 10 and a second base material 20 are joined together so that a recessed portion 11 formed in the first base material 10 is used as a flow channel 5, an electrode 30 having a recessed and projected shape that encourages a fluid flowing through the flow channel 5 to become a turbulent flow is formed at least on part of a portion corresponding to the flow channel 5, the portion being part of the second base material 20, and the second base material 20 is provided with an electrode extraction section 40 that is brought into conduction with the electrode 30.

## Description

### Technical Field

The present invention relates to a flow channel plate having an electrode in a flow channel, and more particularly to a flow channel plate, having an electrode in a flow channel, that continuously performs an electrochemical reaction by applying a voltage to the electrode.

### Background Art

A flow channel plate formed by a joined member with two base materials joined together is used as a microreactor or a chip for use in analysis.

For example, in PTL 1, a microfluidic device is disclosed that is used to flow a fluid including particles to be captured so that fine eddies are formed in the fluid by flowing the fluid through grooves defined on the surface of a wall of a microchannel.

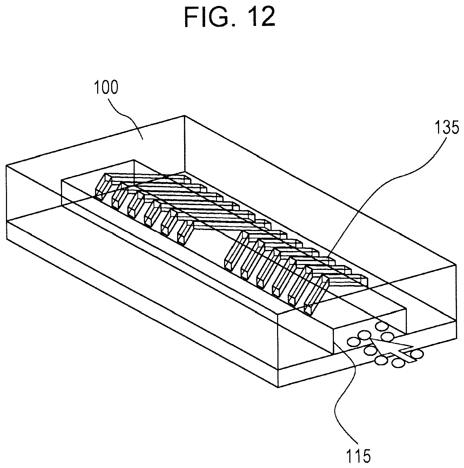

Fig. 12 is an explanatory diagram illustrating a flow channel for particles in a microchannel 115 in which grooves 135 are formed on a wall. When a fluid passes through a herringbone pattern formed by placing the grooves 135 in a row in the microchannel 115 in a microfluidic device 100, the grooves 135 in the flow path of the fluid disturb the flowage of the fluid. When the flowage of the fluid is disturbed depending on the size of the groove 135 and the angle between two arms of the groove 135, fine eddies are generated in the fluid. Although, in some embodiments, no fine eddy is generated, the grooves 135 cause an enough disturbance to change the flow channel in a fluid portion and increase a mutual interaction between the wall and particles.

By contrast, a flow channel plate that performs an electrochemical reaction as a microreactor has an electrode in a flow channel. An electrochemical oxidation reduction reaction is performed on a surface of the electrode by applying a voltage to the electrode provided in the flow channel. An electrochemical reaction can be continuously performed by flowing a fluid through the flow channel.

The microfluidic device described in PTL 1 has no electrode, so the microfluidic device has been such that an electrochemical reaction cannot be performed. Therefore, it can be thought that electrodes are added to the upstream and downstream of the flow channel.

### Citation List

### Patent Literature

PTL 1: PCT Japanese Translation Patent Publication No. 2012-504243

### Summary of Invention

### Technical Problem

However, in the flow channel plate that performs an electrochemical reaction as a microreactor, a flow is likely to become a laminar flow due to the effects of viscosity and the flow channel size. It is difficult to add electrodes to portions of the grooves 135 in the flow channel in the microfluidic device 100 described in PTL 1; in just adding electrodes to the upstream and downstream of the grooves 135, a flow on the electrode surface becomes a laminar flow, so the agitation efficiency could not be increased. Therefore, there has been the problem that, with the electrodes provided at different places from the grooves 135, only the fluid flowing near surfaces of the electrodes contributes to an electrochemical reaction and it is not possible to cause the fluid to sufficiently react.

The present invention solves the above problem and an object of the present invention is to provide a flow channel plate that can cause a sufficient electrochemical reaction.

### Solution to Problem

In a flow channel plate in which a first base material and a second base material are joined together so that a recessed portion formed at least in any one of the first base material and second base material is used as a flow channel, the present invention is characterized in that an electrode having a recessed and projected shape that encourages a fluid flowing through the flow channel to become a turbulent flow is formed at least on part of a portion corresponding to the flow channel, the portion being part of the second base material, and that the second base material is provided with an electrode extraction section that is brought into conduction with the electrode.

According to this structure, due to the electrode having a recessed and projected shape, the fluid flowing through the flow channel becomes a turbulent flow and the agitation efficiency can be increased on the electrode. In addition, the side surfaces of the electrode having a recessed and projected shape also function as an electrode, so the electrode area can be made larger when compared with a flat-plate electrode. Therefore, it is possible to cause a sufficient electrochemical reaction.

In the flow channel plate in the present invention, it is also characterized that the first base material is in a flat-plate shape and the recessed portion is formed in the first base material and that the second base material is in a flat-plate shape and the recessed and projected shape of the electrode is comprised of a plurality of ridges having a predetermined angle with respect to the liquid transfer direction of the flow channel and of an electrode film formed among the plurality of ridges.

According to this structure, it is easy to form the electrode having a recessed and projected shape.

In the flow channel plate in the present invention, it is also characterized that the plurality of ridges are in a V-shape that has a vertex toward the upstream of the fluid flowing through the flow channel.

According to this structure, the agitation efficiency can be further increased on the electrode.

In the flow channel plate in the present invention, it is also characterized that, assuming that a direction perpendicular to a surface of the second base material is the height direction of the flow channel, the plurality of ridges are formed so that their height falls within a range from one-third to two-thirds of the height of the flow channel in the height direction.

According to this structure, the agitation efficiency can be further increased on the electrode without the flow of the fluid being largely hindered.

In the flow channel plate in the present invention, it is characterized that the electrode extraction section has an external electrode formed on a surface of the second base material, the surface being on the opposite side to a surface on the same side as the flow channel, and also has through-electrodes formed so as to pass through the second base material from the surface on the opposite side to the surface on the same side as the flow channel and that the electrode extraction section is electrically connected to the electrode through the through-electrodes.

According to this structure, the electrode can be extracted without the flow channel being affected and the structure does not hinder the fluid flowing through the flow channel from increasing the agitation efficiency on the electrode by becoming a laminar flow.

In the flow channel plate in the present invention, it is characterized that the electrode and electrode extraction section are formed by printing a conductive paste that includes carbon.

According to this structure, since a conductive paste that includes carbon is printed, electrode forming is easy.

### Advantageous Effects of Invention

According to the present invention, due to an electrode having a recessed and projected shape, a fluid flowing in a flow channel becomes a laminar flow, which increases the agitation efficiency on the electrode, and the electrode area can be increased. Therefore, it is possible to provide a flow channel plate that causes a sufficient electrochemical reaction.

### Brief Description of Drawings

[Fig. 1] Fig. 1 is a perspective view illustrating a flow channel plate in an embodiment of the present invention.
[Fig. 2] Fig. 2 is a plan view illustrating the flow channel plate in the embodiment of the present invention.
[Fig. 3] Fig. 3 is a perspective view illustrating a second base material and electrode.
[Fig. 4] Fig. 4 is a cross-sectional view cut along line IV-IV in Fig. 2.
[Fig. 5] Fig. 5 is an explanatory diagram illustrating the flow of a fluid.
[Fig. 6] Fig. 6 is an explanatory diagram illustrating the flow of the fluid on the electrode.
[Fig. 7] Fig. 7 is a process diagram to manufacture the flow channel plate in the embodiment of the present invention, the process diagram being a process diagram to form a first base material.
[Fig. 8] Fig. 8 is a process diagram to manufacture the flow channel plate in the embodiment of the present invention, the process diagram being a process diagram to form a second base material.
[Fig. 9] Fig. 9 is a process diagram to manufacture the flow channel plate in the embodiment of the present invention, the process diagram being a process diagram to form an electrode extraction section.
[Fig. 10] Fig. 10 is a process diagram to manufacture the flow channel plate in the embodiment of the present invention, the process diagram being a process diagram to form an electrode film.
[Fig. 11] Fig. 11 is a process diagram to manufacture the flow channel plate in the embodiment of the present invention, the process diagram being a process diagram to form ridges of the electrode.
[Fig. 12] Fig. 12 is an explanatory diagram illustrating a flow channel for particles in a microchannel in which grooves are formed on a wall in a conventional example.

### Description of Embodiment

An embodiment of the present invention will be described below in detail by using the drawings. For easy comprehension, dimensions on the drawings have been appropriately changed.

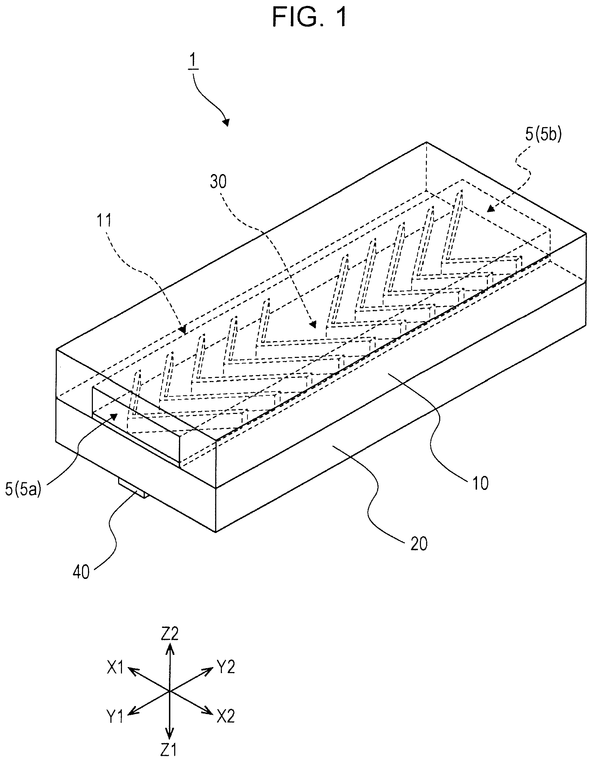

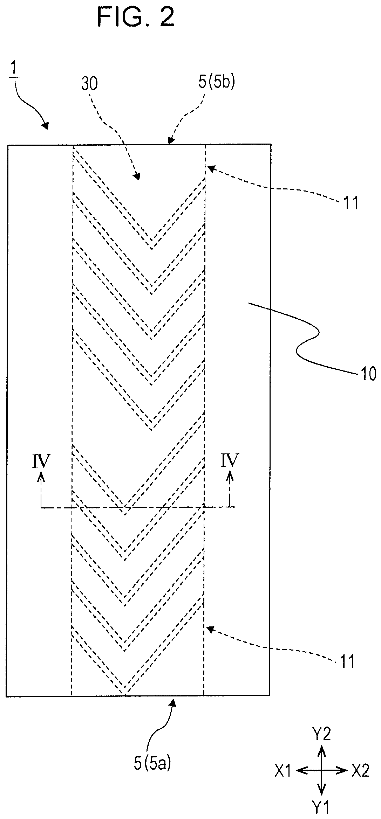

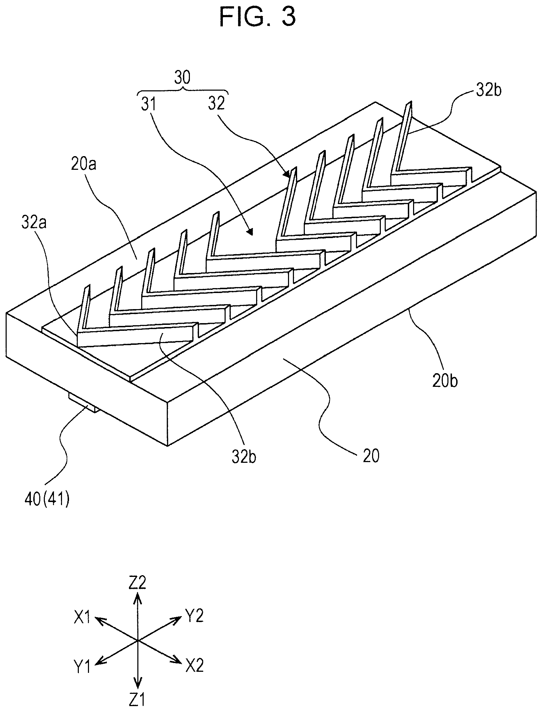

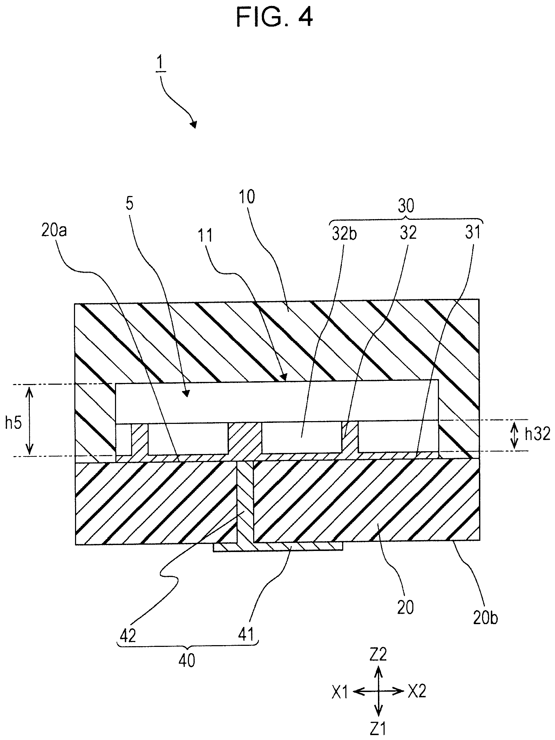

Fig. 1 is a perspective view illustrating a flow channel plate 1 in the embodiment of the present invention. Fig. 2 is a plan view illustrating the flow channel plate 1 in the embodiment of the present invention. Fig. 3 is a perspective view illustrating a second base material 20 and electrode 30. Fig. 4 is a cross-sectional view cut along line IV-IV in Fig. 2.

In the flow channel plate 1 in the embodiment of the present invention, a first base material 10 and the second base material 20 are joined together to form a flow channel 5 through which a fluid is caused to flow, as indicated in Figs. 1 and 2. Fig. 1 is part of the flow channel 5; at extended portions at an upstream 5a and downstream 5b of the fluid flowing through the flow channel 5, various functional elements that control the flow of the fluid are formed, but they will be omitted in the explanation of this embodiment.

The first base material 10 is formed by injection molding of cycloolefin polymers. As indicated in Figs. 1 and 2, the first base material 10 is in a flat-plate shape and a recessed portion 11 is formed in the first base material 10. In this embodiment, the recessed portion 11 formed in the first base material 10 forms walls of the flow channel 5 in the flow channel plate 1.

The second base material 20 is formed by injection molding of cycloolefin polymers. As indicated in Figs. 1 to 3, the second base material 20 is in a flat-plate shape and the electrode 30 is provided on part of a portion corresponding to the flow channel 5, the portion being part of one surface 20a. The electrode 30 is comprised of a plurality of ridges 32 formed in a V-shape that has a vertex 32a toward the upstream 5a of the flow channel 5 and of an electrode film 31 provided among the plurality of ridges 32. The electrode film 31 and ridge 32 in this embodiment are formed by printing a conductive paste that includes carbon.

As indicated in Fig. 4, the flow channel 5 has a cross-section in a substantially rectangular shape that is enclosed by the recessed portion 11 and electrode film 31 and the ridges 32 of the electrode 30 protrude so that part of the cross-section of the flow channel 5 is blocked. Since, as indicated in Fig. 3, the ridges 32 are provided in a V-shape that has the vertex 32a toward the upstream 5a of the flow channel 5, the electrode 30 is in a recessed and projected shape that has a predetermined angle with respect to the liquid transfer direction of the flow channel 5. In this embodiment, the angel is set to 40 degrees with respect to the liquid transfer direction (Y1-Y2 direction in Fig. 3) of the flow channel 5. The ridge 32 is formed in a rectangular shape perpendicular to the electrode film 31 (provided on the one surface 20a of the second base material 20, the one surface 20a being on the same side as the flow channel 5). As indicated in Fig. 4, the ridge 32 is formed to a height h32, which is about a half with respect to the height (dimension in the Z1-Z2 direction) h5 of the flow channel 5 in its height direction. Due to this, as indicated in Fig. 4, side surfaces 32b block part of the flow channel 5 and change the flow of the fluid.

Furthermore, an electrode extraction section 40 is provided on another surface 20b of the second base material 20, the other surface 20b being opposite to the one surface 20a on the same side as the flow channel 5. The electrode extraction section 40 has an external electrode (bus electrode 41) formed on the other surface 20b of the second base material 20 and also has through-electrodes 42 formed by passing through the second base material 20 from the other surface 20b to the one surface 20a. The electrode extraction section 40 is electrically connected to the electrode 30 through the through-electrodes 42 in the vicinity of the vertexes 32a of the ridges 32. The through-electrode 42 and bus electrode 41 in this embodiment are formed by printing a conductive paste that includes carbon.

In this embodiment, since the electrode extraction section 40 is not exposed to the flow channel 5, the electrode extraction section 40 does not hinder the flow of the fluid that flows in the flow channel 5. In addition, since the bus electrode 41 is provided, through the through-electrodes 42, on the other surface 20b opposite to the one surface 20a on the same side as the flow channel 5, it is easy to make the resistance values of the through-electrodes 42 and bus electrode 41 small. Therefore, a resistance loss can be reduced without hindering the flow of the fluid.

Although, in this description, an aspect in which only one electrode 30 is disposed together with the electrode extraction section 40, which is electrically connected, is described, a plurality of electrodes are disposed in the flow channel plate 1. For example, the electrode 30 in this embodiment is provided and another electrode that forms a pair is further provided at the upstream or downstream of the flow channel 5; the other electrode is also formed in the same shape as the electrode 30 in this embodiment. The other electrode that forms a pair may be in a different shape from the electrode 30 in this embodiment.

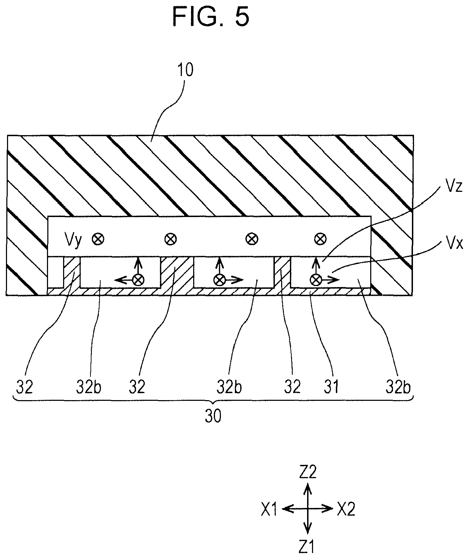

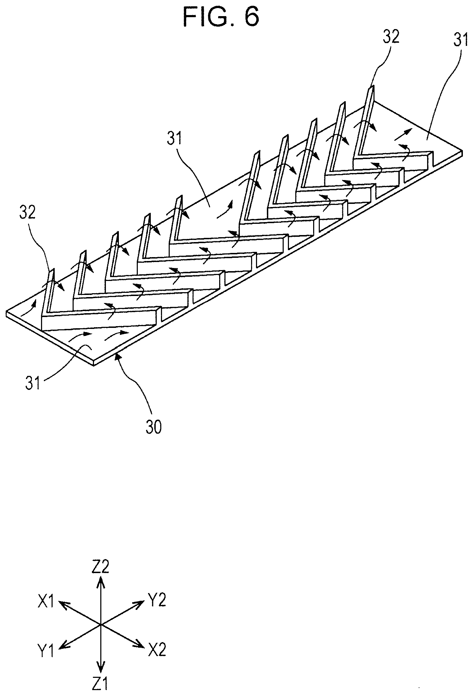

Next, the flow of a fluid in the flow channel plate 1 in this embodiment will be described. Fig. 5 is an explanatory diagram illustrating the flow of a fluid. Fig. 6 is an explanatory diagram illustrating the flow of the fluid on the electrode 30.

It will be assumed that at the average flow velocity Vy of a fluid flowing in the flow channel 5, on a boundary (wall surface of the flow channel 5) with the electrode film 31, the flow is a laminar flow in which the flow velocity is zero. Since the electrode 30 having a recessed and projected shape is provided, the flow, in the Y2 direction, of the fluid near the boundary with the electrode film 31 is hindered by the ridges 32 in the height direction of the flow channel 5 (Z1-Z2 direction), so a flow velocity component Vx along the side surface 32b of the ridge 32 and a flow velocity component Vz that attempts to pass over the ridge 32 toward the Z2 side are generated. The flow velocity component Vx and flow velocity component Vz vary depending on the position. On the X1 side and X2 side of the vertex 32a of the ridge 32, the fluid flows so that it is separated into a fluid in which the flow velocity component Vx has an orientation toward the X1 side and a fluid in which the flow velocity component Vx has an orientation toward the X2 side. By contrast, on the downstream side of the ridge 32 on which the fluid has passed over the ridge 32, a flow in the opposite direction is generated so as to compensate the flows of these fluids. As a result of these flows being combined, a spiral flow in directions (X1-X2 direction and Z1-Z2 direction) perpendicular to the direction (Y-Y2 direction) of the flow in the flow channel 5 is generated. Since, in this embodiment, a plurality of ridges 32 are provided, a flow having these flow velocity components Vx and Vz is repeatedly generated, so the vicinity of the electrode 30 having a recessed and projected shape is in a state in which the laminar flow is disturbed. Therefore, the fluid in the vicinity of the boundary between the electrode film 31 and the side surface 32b of the ridge 32 is agitated, so the fluid is easily exchanged and the flow velocity is increased when compared with a case in which there is only a laminar flow. If the height h32 of the ridge 32 falls within a range from one-third to two-thirds of the height h5 of the flow channel 5 in the height direction, a sufficient agitation effect is obtained.

### Example

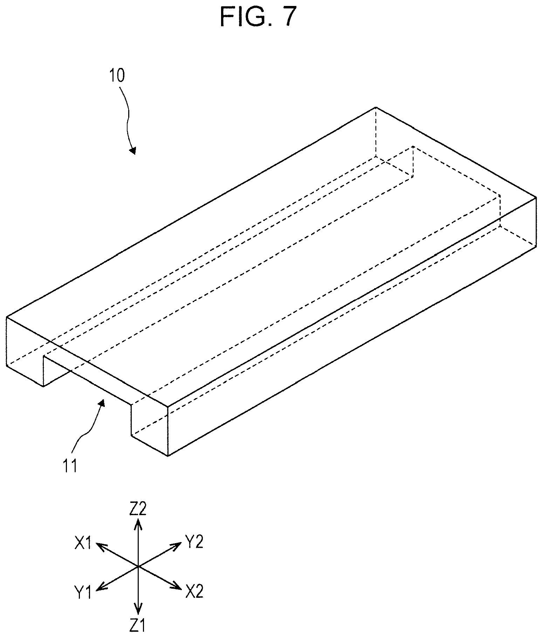

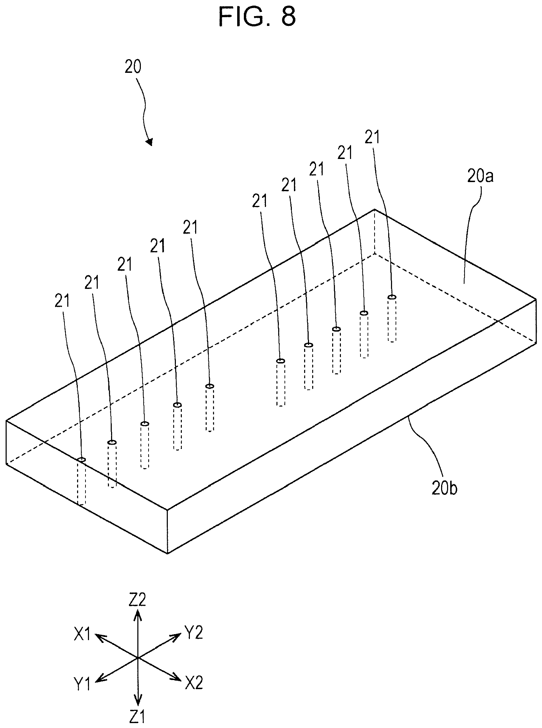

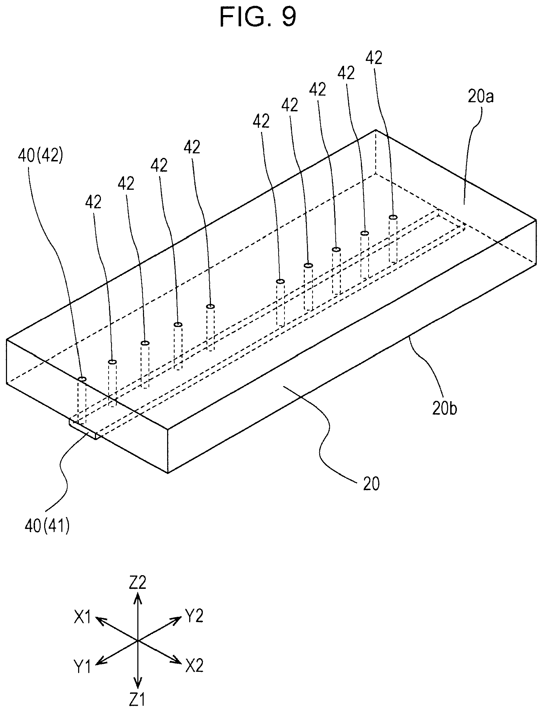

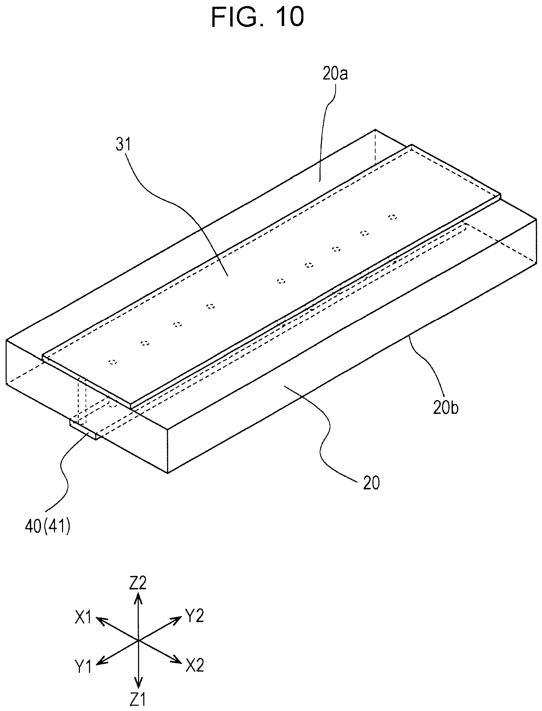

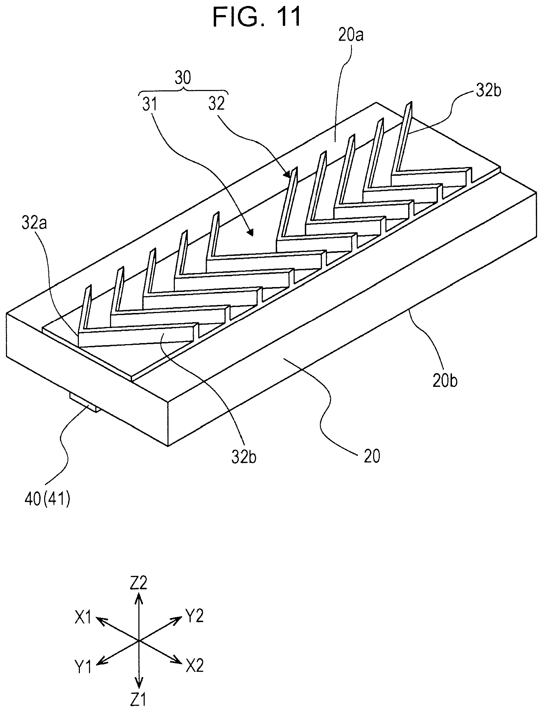

The flow channel plate 1 in this embodiment was manufactured as described below. Fig. 7 is a process diagram to manufacture the flow channel plate 1, the process diagram being a process diagram to form the first base material 10. Fig. 8 is a process diagram to form the second base material 20. Fig. 9 is a process diagram to form the electrode extraction section 40. Fig. 10 is a process diagram to form the electrode film 31. Fig. 11 is a process diagram to form the ridge 32 of the electrode 30.

The first base material 10 was formed in a flat-plate shape by injection molding of cycloolefin polymers. As indicated in Fig. 7, the width (dimension in the X1-X2 direction) of the recessed portion 11 was formed to about 4 mm and the depth (Z1-Z2 direction) was formed to about 1 mm.

The second base material 20 was formed in a flat-plate shape by injection molding of cycloolefin polymers. As indicated in Fig. 8, a plurality of through-holes 21 with a diameter of 0.2 mm were formed at predetermined positions.

The bus electrode 41 was printed on the other surface 20b of the second base material 20, the other surface 20b being opposite to the one surface 20a, by printing a conductive paste that includes carbon, and was fired. Then, a conductive paste that includes carbon was injected into the through-holes 21 from the one surface 20a of the second base material 20 by using a dispenser, and was fired. Due to these, as indicated in Fig. 9, the electrode extraction section 40 was formed on the second base material 20. Furthermore, as indicated in Fig. 10, the electrode film 31 was printed on the one surface 20a of the second base material 20 by printing a conductive paste that includes carbon, and was fired. Then, the ridges 32 were printed by printing a conductive paste that includes carbon and was fired, after which the ridges 32 were stacked on part of the electrode film 31, as illustrated in Fig. 11. Due to this, the electrode 30 having a recessed and projected shape in which the thickness (dimension in the Zl-Z2 direction) of the electrode film 31 is about 0.1 mm, the thickness (dimension in the Z1-Z2 direction) of the ridge 32 is about 0.5 mm, and the width is about 0.2 mm was formed. The cross-sectional shape of the ridge 32 is rectangular, and the ridge 32 has the height (dimension in the Z1-Z2 direction) of the side surface 32b, the height corresponding to the thickness of the ridge 32. The ridge 32, which has a V-shape having the vertex 32a in the Y1 direction, was provided so as to extend at an angle of 40 degrees with respect to the Y1-Y2 direction. In addition, five ridges 32 with the position of the vertex 32a in the X1-X2 direction being a first position were placed in a line in the Y1-Y2 direction at predetermined intervals. Furthermore, five ridges 32 with the position of the vertex 32a in the X1-X2 direction being a second position were similarly placed in a line in the Y1-Y2 direction at predetermined intervals. At this time, the position of the through-hole 21 matches the position of the vertex 32a and the electrode film 31 comes into contact with the conductive paste injected into the through-holes 21, so the bus electrode 41 and electrode 30 are electrically connected.

The flow channel plate 1 was obtained by bringing a surface of the first base material 10, the recessed portion 11 being formed in the surface, and the one surface 20a of the second base material 20, the electrode 30 being formed on the second base material 20, into tight contact with each other through an adhesive that includes paraffin as the main component and then bonding these surfaces so that the flow channel 5 is formed. The bonding method is not limited to this type of method in which adhesion is performed through an adhesion layer; thermal welding and the like are possible.

In the flow channel plate 1, a fluid is transferred through the flow channel 5 so that the vertex 32a of the ridge 32 becomes the upstream side. To obtain a desired electrochemical reaction, a voltage is applied from the bus electrode 41 to the electrode 30, and a current due to the electrochemical reaction is passed. It is preferable to use a carbon material for the flow channel plate 1 because of the width of a potential window in an oxidation-reduction reaction and chemical resistance to a liquid to be used, the ability to form the flow channel plate 1 in a desired pattern by, for example, screen printing, and the like.

With the flow channel plate 1 in this embodiment, the fluid flowing in the flow channel 5 becomes a laminar flow due to the electrode 30 having a recessed and projected shape, so the agitation efficiency can be increased on the electrode 30 and the fluid can be sufficiently supplied to the surface of the electrode 30. In addition, the electrode 30 having a recessed and projected shape can have a larger electrode area than a flat-plate electrode because the side surfaces 32b also function as an electrode. Therefore, a sufficient electrochemical reaction can be caused by flowing the fluid through the flow channel 5 while agitating the fluid and applying a voltage to the electrode 30.

The flow channel plate 1 in this embodiment and a flow channel plate in a shape without recessed and projected parts were used to transfer water and dodecane (CH3-(CH2)10-CH3) from the upstream in a state in which they are separated, and mixture degrees at the downstream were compared. A difference of 10 times and more in the mixture degree of water and dodecane (CH3-(CH2)10-CH3) was obtained between the flow channel plate 1 in this embodiment and the flow channel plate in a shape without recessed and projected parts.

Effects obtained from this embodiment will be described below.

According to the present invention, in the flow channel plate 1 in which the first base material 10 and second base material 20 joined together so that the recessed portion 11 formed in the first base material 10 is used as the flow channel 5, the electrode 30 having a recessed and projected shape is formed on part of a portion corresponding to the flow channel 5, the portion being part of the second base material 20.

According to this structure, due to the electrode 30 having a recessed and projected shape, the fluid flowing through the flow channel 5 becomes a turbulent flow and the agitation efficiency can be increased on the electrode 30. In addition, the side surfaces 32b of the electrode 30 having a recessed and projected shape also function as an electrode, so the electrode area can be made larger when compared with a flat-plate electrode. Therefore, it is possible to cause a sufficient electrochemical reaction by flowing the fluid through the flow channel 5 and applying a voltage to the electrode 30 provided in the flow channel 5.

In the flow channel plate 1 in the present invention, the first base material 10 is in a flat-plate shape and the recessed portion 11 is formed in the first base material 10, and the second base material 20 is in a flat-plate shape and the recessed and projected shape of the electrode 30 0 is comprised of a plurality of ridges 32 having a predetermined angle with respect to the liquid transfer direction of the flow channel 5 and of the electrode film formed 31 among the plurality of ridges 32.

According to this structure, it is easy to form the electrode 30 having a recessed and projected shape.

In the flow channel plate 1 in the present invention, the plurality of ridges 32 are in a V-shape that has the vertex 32a toward the upstream 5a of the fluid flowing through the flow channel 5.

According to this structure, the agitation efficiency can be further increased on the electrode 30.

In the flow channel plate 1 in the present invention, assuming that a direction perpendicular to the one surface 20a of the second base material 20 is the height direction of the flow channel 5, the plurality of ridges 32 are formed so that their height falls within a range from one-third to two-thirds of the height h5 of the flow channel 5 in the height direction.

According to this structure, the agitation efficiency can be further increased on the electrode 30 without the flow of the fluid being largely hindered.

In the flow channel plate 1 in the present invention, the electrode extraction section 40 has the bus electrode 41 formed on the other surface 20b of the second base material 20, the surface being on the opposite side to the one surface 20a on the same side as the flow channel 5, and also has the through-electrodes 42 formed so as to pass through the second base material 20 from the other surface 20b to the one surface 20a; the electrode extraction section 40 is electrically connected to the electrode 30 through the through-electrodes 42.

According to this structure, electrode extraction is possible without the flow channel 5 being affected and the structure does not hinder the fluid flowing through the flow channel 5 from increasing the agitation efficiency on the electrode 30 by becoming a laminar flow.

In the flow channel plate 1 in the present invention, the electrode 30 and electrode extraction section 40 are formed by printing a conductive paste that includes carbon.

According to this structure, since a conductive paste that includes carbon is printed, electrode forming is easy.

So far, the flow channel plate 1 in the present invention has been specifically described, but the present invention is not limited to the above embodiment. Various changes are possible without departing from the intended scope of the present invention. For example, the present invention can also be practiced by making variations as described below. These variations are also included in the technical range of the present invention.
(1) Although, in this embodiment, as for the electrode 30, the electrode film 31 has been formed among the plurality of ridges 32, the electrode 30 may be comprised of only a plurality of ridges 32.
(2) Although, in this embodiment, two sets of a plurality of ridges 32 have been combined, the position of the vertex 32a being different between the two sets, three sets or more may be combined.
(3) Although, in this embodiment, the recessed portion 11 has been formed in the first base material 10, the recessed portion 11 and through-holes 21 may be formed in the second base material 20. In addition, although cycloolefin polymers have been used for the first base material 10 and second base material 20, cycloolefin polymers may be changed to cycloolefin copolymers.
Furthermore, the shape of the electrode extraction section 40 may be in another aspect. Moreover, the electrode 30 and electrode extraction section 40 may be formed by a manufacturing method other than printing.

### Reference Signs List

- 1: flow channel plate
- 5: flow channel
- 5a: upstream
- 5b: downstream
- 10: first base material
- 11: recessed portion
- 20: second base material
- 20a: one surface
- 20b: other surface
- 21: through-hole
- 30: electrode
- 31: electrode film
- 32: ridge
- 32a: vertex
- 32b: side surface
- 40: electrode extraction section
- 41: bus electrode
- 42: through-electrode

## Claims

1. A flow channel plate, in which a first base material and a second base material are joined together so that a recessed portion formed at least in any one of the first base material and the second base material is used as a flow channel, wherein:
an electrode having a recessed and projected shape that encourages a fluid flowing through the flow channel to become a turbulent flow is formed at least on part of a portion corresponding to the flow channel, the portion being part of the second base material; and
the second base material is provided with an electrode extraction section that is brought into conduction with the electrode.

2. The flow channel plate according to claim 1, wherein:
the first base material is in a flat-plate shape and the recessed portion is formed in the first base material; and
the second base material is in a flat-plate shape and the recessed and projected shape of the electrode is comprised of a plurality of ridges having a predetermined angle with respect to a liquid transfer direction of the flow channel and of an electrode film formed among the plurality of ridges.

3. The flow channel plate according to claim 2, wherein the plurality of ridges are in a V-shape that has a vertex toward an upstream of the fluid flowing through the flow channel.

4. The flow channel plate according to claim 3, wherein, assuming that a direction perpendicular to a surface of the second base material is a height direction of the flow channel, the plurality of ridges are formed so that a height of the plurality of ridges falls within a range from one-third to two-thirds of the height of the flow channel in the height direction.

5. The flow channel plate according to any one of claims 1 to 4, wherein the electrode extraction section has an external electrode formed on a surface of the second base material, the surface being on an opposite side to a surface on the same side as the flow channel, and also has a through-electrode formed so as to pass through the second base material from the surface on the opposite side to the surface on the same side as the flow channel; an electrical connection to the electrode is established through the through-electrode.

6. The flow channel plate according to any one of claims 1 to 5, wherein the electrode and electrode extraction section are formed by printing a conductive paste that includes carbon.
